# EUROPEAN PATENT APPLICATION

(11) **EP 1 403 681 A1**
(43) Date of publication of application: **31.03.2004**
(21) Application number: 02425585.3
(22) Date of filing: 27.09.2002
(51) Int. Cl.: G02C 1/04

(54) **Spectacles**

(71) Applicant: Safilo Societa' Azionaria Fabbrica Italiana Lavorazione Occhiali S.p.a., 32044 Pieve di Cadore (BL) (IT)
(72) Inventor: Tabacchi,Vittorio, 32044 Pieve di Cadore(BL) (IT)
(74) Representative: Cantaluppi, Stefano

(57) **Abstract**

Spectacles comprising a front support (2) with a frame (3) defined along a curved eyebrow profile and lenses (6) which can be fitted on the frame (3), as well as restraining means (7) for restraining the lenses on the frame (3) are described and are characterized in that the restraining means comprise, in the lenses, at least one engagement element (8) which can be engaged on the frame (3) so as to restrain the lenses (6) releasably on the frame.

## Description

The subject of the present invention is spectacles of the type described in the preamble to main Claim 1.

In the specific technical field and, in particular, in the field of rimless spectacles, there is a need to provide systems for restraining the lenses on the spectacle frame. A typical example is that of a frame with a front crosspiece which extends along a curved eyebrow profile and to which the spectacle lenses are connected.

In this specific field, spectacles which provide for the use of an auxiliary frame for clamping the lens to the frame, for example, by screw means, or which provide for other quite complex processing of the frame to enable the lens to be restrained thereon, are known.

The primary object of the present invention is structural and functional improvement of the spectacles of the prior art with regard to the aspects mentioned above.

In particular, an object of the invention is to provide a pair of spectacles which permits quick and easy fitting and removal of the lenses so as to make it easier for the user to use the spectacles with interchangeable lenses.

Another object is to provide a pair of spectacles having a simplified structure in order to ensure low production costs whilst achieving an overall appearance which is no less pleasing.

A further object is to provide a pair of spectacles which permits interchangeability of the lenses even when changing from a two-lens version to a single-lens version of the spectacles and vice versa, whilst retaining the same frame, according to the user's specific requirements.

These objects and others which will be made clear in the following description are achieved by the invention by means of spectacles formed in accordance with the appended claims.

The characteristics and the advantages of the invention will become clearer from the following detailed description of a preferred embodiment thereof, described by way of non-limiting example, with reference to the appended drawings, in which:
- Figure 1 is a perspective view of an embodiment of spectacles formed in accordance with the present invention,
- Figures 2 and 3 are exploded, perspective views of the spectacles of Figure 1, and
- Figures 3 and 4 are views of details of the spectacles of the previous drawings, in partial section and on an enlarged scale.

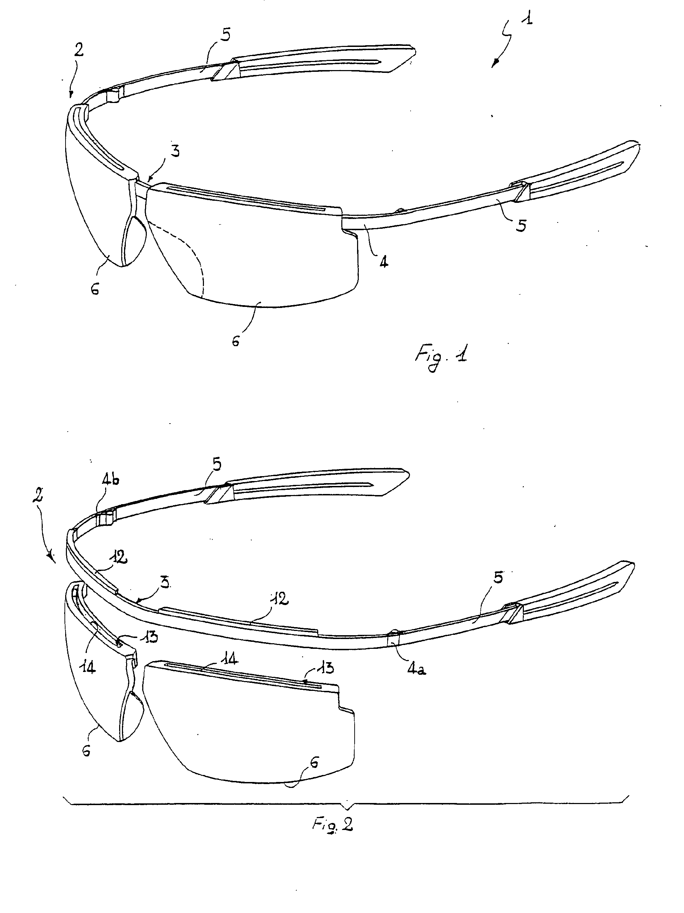

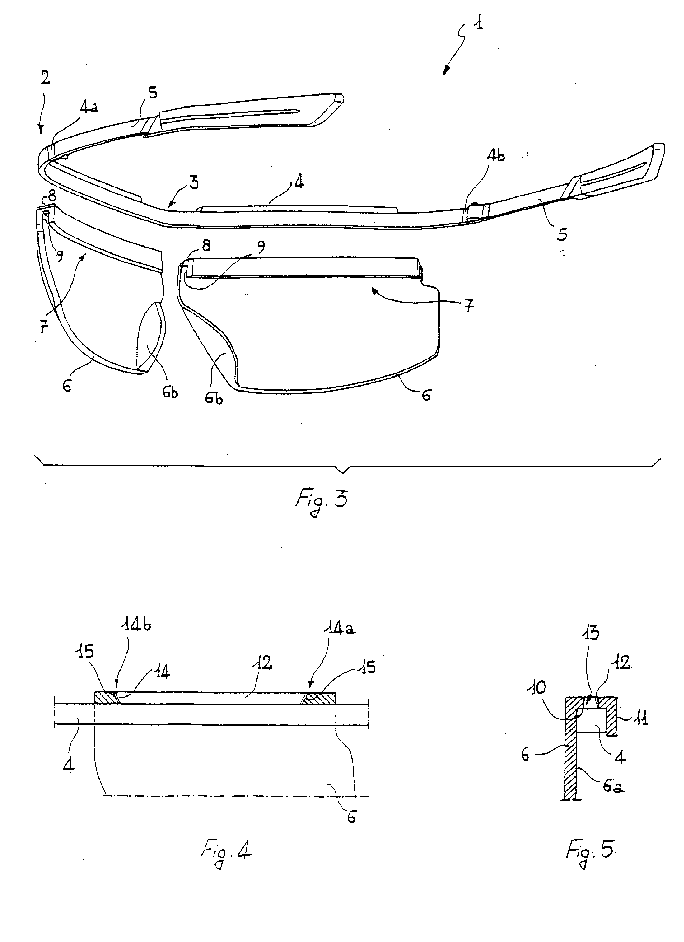

With reference to Figures 1 to 3, an embodiment of spectacles formed in accordance with the present invention is generally indicated 1. The spectacles shown in the above-mentioned drawings are equipped with a support 2 comprising a frame 3 with a front crosspiece 4 defining a curved eyebrow profile extending between opposite ends 4a, 4b at which the support is articulated to respective arms 5.

Restraining means, generally indicated 7, are provided on the spectacles for restraining respective lenses 6 on the front frame. These restraining means comprise, in each lens 6, a respective engagement element, generally indicated 8, which can be engaged on the frame 3; only one of the engagement elements will be described in detail below since they are structurally identical.

The engagement element 8 is formed as a pocket, elongate in the direction in which the arcuate eyebrow profile extends and defining, along the said profile, a seat 9 which can house a portion of the front crosspiece 4 substantially with a form fit. This fit is preferably achieved by coupling the seat 9 with the frame from above, by fitting the crosspiece in the seat.

The engagement element with the seat 9 is formed integrally with the lens 6 and the lens is preferably produced by moulding of a plastics material, the seat 9 being formed contemporaneously at the moulding stage. It should be noted that nose-rest elements 6b of preselected configuration may also be formed integrally with the lens during the moulding stage.

The seat 9 is delimited by a top wall 10 which extends at right angles from an inner lens surface 6a, and from which a lip 11 projects so as to be substantially parallel to the inner lens surface 6a, with a shape such as to extend around the crosspiece of the support on the inner side, "inner side" meaning the side which faces the user in use.

The engagement of the lens on the frame by a form fit between the seat 9 and the crosspiece 4 thus restrains the lens releasably on the frame.

In order to maximize the function of the restraint of the lens on the frame, the front crosspiece 4 comprises a projection 12 protruding in the region of the curved eyebrow profile and arranged to engage an opening 13 formed in the top wall 10 of the seat 9.

In greater detail, the opening 13 is formed through the thickness of the top wall 10 and is in the form of a slot 14 which is elongate predominantly in the direction in which the arcuate eyebrow profile extends. The shape and size of each projection 12 is such that it projects from the crosspiece 4 so as to be substantially flush with the lens 6 when the lens is engaged on the frame.

At the opposite longitudinal ends of the slot, which are indicated 14a, 14b, the mutual coupling portions of the projection 12 with the slot 14 are provided with undercut surfaces 15 which have a slight inclination (Figure 4) suitable for resisting the removal of the projection 12 from the corresponding slot 14 and thus achieving a firmer restraint of the lenses on the frame.

Moreover, by engagement in the slot 14, the projection 12 has the effect of resisting relative movement between the lens and the frame along the arcuate eyebrow profile.

The spectacles according to the invention may be formed with a pair of separate lenses which are structurally independent of one another and each of which has a respective engagement element, or the spectacles may be of the single-lens type with lens portions incorporated in a single and sole lens body which in turn has one or more engagement elements according to the invention.

The invention also provides for the lenses in the two-lens version and the single-lens version of the spectacles to be interchangeable on the same frame 3 to allow the user to change from one configuration to the other, or simply to replace lenses of the same type, thus increasing the versatility of the spectacles.

The invention thus achieves the objects proposed, affording many advantages over known solutions.

A first main advantage lies in the fact that the spectacles formed in accordance with the invention permit quick and easy fitting/removal of the lenses, which also ensures easy interchangeability of the lenses.

Another advantage is that the lenses designed for the spectacles according to the invention have a substantially self-supporting structure in which the means for engagement on the frame are incorporated, resulting in simplifications in construction and assembly as well as unquestionable reductions in production costs.

One of the main advantages is that of giving the spectacles of the invention an excellent appearance whilst ensuring that the lenses are restrained firmly on the frame.

## Claims

1. Spectacles comprising a front support (2) with a frame (3) defined along a curved eyebrow profile and lenses (6) which can be fitted on the frame (3), as well as restraining means (7) for restraining the lenses on the frame (3), **characterized in that** the restraining means comprise, in the lenses (6), at least one engagement element (8) which can be engaged on the frame (3) so as to restrain the lenses (6) releasably on the frame.

2. Spectacles according to Claim 1 in which the frame (3) can engage the at least one engagement element (8) with a substantial mutual form fit.

3. Spectacles according to Claim 1 or Claim 2 in which the at least one engagement element (8) is formed integrally with the corresponding lens (6).

4. Spectacles according to any one of the preceding claims, in which the engagement element (8) is formed as a pocket defining, in the region of the curved eyebrow profile, a seat (9) which can be coupled with the frame (3) of the support from above by the fitting of the frame in the seat (9).

5. Spectacles according to one or more of the preceding claims, in which the frame (3) further comprises at least one projection (12) extending at least partially along the curved eyebrow profile and arranged to engage an opening (13) formed in a top wall of the seat (9).

6. Spectacles according to Claim 5 in which the opening (13) is formed through the top wall (10) of the seat (9) and the projection (12) protrudes from the frame (3) so as to be substantially flush with the lens (6) when the lens is engaged on the frame (3).

7. Spectacles according to Claim 5 or Claim 6 in which the opening (13) is in the form of a slot (14) which is elongate predominantly in the direction in which the arcuate eyebrow profile extends longitudinally.

8. Spectacles according to Claim 7 in which undercut surfaces (15) are provided in the mutual coupling portions of the projection (12) with the slot (14), in the region of the opposite longitudinal ends of the slot (14), to resist the removal of the frame (3) from the seats (9) of the lenses (6).

9. Spectacles according to any one of the preceding claims in which the frame (3) comprises a front crosspiece (4) extending between opposite longitudinal ends (4a, 4b) for articulation to respective arms (5), the lenses (6) being engageable on the crosspiece (4) by the engagement of the crosspiece (4) in the respective seats (9) of the engagement element (8).

10. Spectacles according to one or more of the preceding claims of the two-lens type, with a pair of separate and structurally independent lenses (6) each of which is provided with the means for restraining it on the frame.

11. Spectacles according to one or more of Claims 1 to 9, of the single-lens type, with lens portions incorporated in a single body provided with the means for restraining it on the frame.

12. Spectacles according to one or more of the preceding claims in which the lenses (6) are restrained interchangeably on the frame of the front support.

13. Spectacles according to any one of the preceding claims in which the lens (6) and the corresponding element (8) for engagement on the frame of the support are formed integrally by moulding of a plastics material.
